# EUROPÄISCHE PATENTSCHRIFT

(11) **EP 3 841 254 B1**
(45) Veröffentlichungstag und Bekanntmachung des Hinweises auf die Patenterteilung: **25.01.2023**
(21) Anmeldenummer: 19753060.3
(22) Anmeldetag: 12.08.2019
(51) Int. Cl.: E02F 3/24, B65G 65/20

(54) **SCHAUFELRAD MIT EINER ENTRIEGELUNGSEINRICHTUNG UND VERFAHREN ZUM UMSCHWENKEN VON SCHAUFELN EINES SCHAUFELRADES**
BUCKET WHEEL WITH AN UNLOCKING DEVICE, AND METHOD FOR PIVOTING BUCKETS OF A BUCKET WHEEL
ROUE À AUBES COMPRENANT UN DISPOSITIF DE DÉVERROUILLAGE ET PROCÉDÉ POUR LE PIVOTEMENT D'AUBES D'UNE ROUE À AUBES

(30) Priorität: 22.08.2018 DE 102018214187
(43) Veröffentlichungstag der Anmeldung: 30.06.2021
(73) Patentinhaber: FLSmidth A/S, 2500 Valby (DK)
(72) Erfinder: JANN, Markus, 66424 Homburg (DE); PACKE, Susanne, 66333 Völklingen (DE); KILIAN, Jörg, 66538 Neunkirchen (DE); WOHLGEMUTH, Christian, 66564 Ottweiler (DE)
(86) Internationale Anmeldenummer: PCT/EP2019/071555
(87) Internationale Veröffentlichungsnummer: WO 2020/038750

(56) Entgegenhaltungen:
- DE-A1- 2 524 212
- DE-B4-102011 015 247
- DE-C- 725 729
- FR-A2- 2 361 507
- GB-A- 1 510 510
- JP-A- S58 113 033
- JP-A- 2018 122 967
- JP-U- S5 363 188
- US-A- 4 445 608

## Beschreibung

Die Erfindung betrifft ein Schaufelrad mit einer Entriegelungseinrichtung sowie ein Verfahren zum Umschwenken von Schaufeln eines Schaufelrades.

Schaufelräder finden üblicherweise Anwendung bei einem Brückenschaufelradgerät zum Rückladen von Schüttgut. Ein Schaufelrad weist einen Schaufelradrahmen auf, an dem eine Mehrzahl von Schaufeln angebracht sind. Die Schaufeln sind derart ausgerichtet, dass ihre Schnittkante in Rotationsrichtung weist, sodass ein Abbau von Material in einer Rotationsrichtung des Schaufelrades möglich ist. Im Betrieb des Schaufelrades ist es häufig erforderlich, die Rotationsrichtung umzukehren, um einen Abbau von vor oder hinter dem Schaufelrad liegenden Materialhalden durchführen zu können. Dies erfordert eine Umkehr der Schaufeln, sodass die Schnittkante in die Rotationsrichtung der Schaufel weist. Zum Umkehren der Schaufeln sind verschiedene Vorrichtungen aus dem Stand der Technik bekannt.

Aus der US 4,445,608 A ist ein Schaufelrad für einen Schaufelradbagger bekannt, wobei die Schaufeln bei einer Umkehr der Drehrichtung des Schaufelrades von einer ersten in eine zweite Position umgeschwenkt werden. Aus der DE 10 2011 015 247 B4 ist ein Schaufelrad mit einer Einrichtung zum Umschwenken von am Schaufelrad angeordneten Schaufeln bekannt, und die Schaufeln können zwischen zwei Schwenkpositionen bewegt werden. Damit kann das Schaufelrad auch in zwei entgegengesetzten Drehrichtungen betrieben werden. Zum Umschwenken der Schaufeln sind diese mit einer Gelenkverbindung in einer Schwenkachse schwenkbar am Schaufelradrahmen angeordnet.

Um die Schaufeln in den jeweiligen Schwenkpositionen zu fixieren, sind Verriegelungsbolzen vorgesehen, in die Anlagestücke an den Schaufeln einrasten können, und soll die Schaufel zwischen den Schwenkpositionen umgeschwenkt werden, wird eine Umstellvorrichtung aktiviert, die mit einem Kippbolzen an den Schaufeln zusammenwirkt, wobei zugleich die Verriegelungsbolzen gelöst werden, um die Anlagestücke an den Schaufeln freizugeben. Über Kurvenkulissen wird die Schwenkbewegung der Schaufel durch ein langsames Drehen des Schaufelrades erzeugt, bis ein weiteres Anlagestück mit einem weiteren Verriegelungsbolzen verrastet.

Im Betrieb eines Schaufelrades werden die Schaufeln in das zu fördernde Material eingetaucht, sodass auch die Verriegelungsbolzen in Eingriff mit den Anlagestücken einer starken Einwirkung durch das zu fördernde Material ausgesetzt sind. Dadurch ergibt sich eine nur verminderte Zuverlässigkeit der Umstellvorrichtung, insbesondere da die Verriegelungstechnik mit dem Bolzen und den Anlagestücken frei zugänglich bleiben müssen, sodass die Umstellvorrichtung bei einer Aktivierung in Eingriff mit den Verriegelungen gelangen kann. Ein Verschmutzen der Kurvenkulissen ist daher sehr wahrscheinlich. Auch ist eine präzise Ausrichtung der Kulissen und Bolzen zueinander erforderlich, was eine sehr aufwändige Installation bedingt. Im Ergebnis ergibt sich eine nur eingeschränkte Zuverlässigkeit einer solchen Umstellvorrichtung.

Aus der US 4,009,531 A1 ist ein Schaufelrad mit Schaufeln bekannt, die in beiden Drehrichtungen des Schaufelrades Material fördern können, ohne dass diese umgeschwenkt werden müssen. Nachteilhafterweise ist die hohe Verschleißanfälligkeit der Doppelschaufeln.

Davon ausgehend ist es Aufgabe der vorliegenden Erfindung, ein Schaufelrad anzugeben, das in beiden Rotationsrichtungen betrieben werden kann und wobei auf einfache und zuverlässige Weise die Schaufeln umschwenken.

Diese Aufgabe wird erfindungsgemäß durch eine Vorrichtung mit den Merkmalen des unabhängigen Vorrichtungsanspruchs 1 und durch ein Verfahren mit den Merkmalen des unabhängigen Verfahrensanspruchs 12 gelöst. Vorteilhafte Weiterbildungen ergeben sich aus den abhängigen Ansprüchen.

Ein Schaufelrad umfasst nach einem ersten Aspekt einen Schaufelradrahmen eine Mehrzahl von an dem Schaufelradrahmen angebrachten Schaufeln, wobei die Schaufeln um eine Schwenkachse schwenkbar an dem Schaufelradrahmen angeordnet sind. Jede Schaufel weist eine Halteeinrichtung auf und ist mittels der Halteeinrichtung am Schaufelradrahmen angeordnet, wobei die Halteeinrichtung derart ausgebildet ist, dass die jeweilige Schaufel an dem Schaufelradrahmen mittels der Halteeinrichtung in einer ersten Schwenkposition und einer zweiten Schwenkposition arretierbar ist, um das Schaufelrad in einer ersten Drehrichtung mit den Schaufeln in der ersten Schwenkposition und in einer entgegengesetzten zweiten Drehrichtung mit den Schaufeln in der zweiten Schwenkposition zu betreiben. Das Schaufelrad weist eine Entriegelungseinrichtung auf zum Bewegen der Halteeinrichtung von einer Halteposition, in der die Halteeinrichtung ein Schwenken der Schaufel um die Schwenkachse verhindert, in eine gelöste Position ist, in der die Halteeinrichtung ein Schwenken der Schaufel um die Schwenkachse erlaubt, sodass die Schaufel in der gelösten Position der Halteeinrichtung schwerkraftbedingt von der ersten Schwenkposition in die zweite Schwenkposition bewegt wird. Vorzugsweise ist die Halteeinrichtung derart ausgebildet, dass sie beim Erreichen der zweiten Schwenkposition automatisch zurück in die Halteposition bewegbar ist, wobei die Halteeinrichtung die jeweilige Schaufel arretiert. Vorzugsweise ist die Halteeinrichtung genau einer Schaufel zugeordnet, sodass die Schaufel mittels der gleichen Halteeinrichtung in der ersten Schwenkposition und der zweiten Schwenkposition arretierbar ist. Es versteht sich von selbst, dass die Arretierung der Schaufel mittels der Halteeinrichtung in der ersten Schenkposition nicht gleichzeitig mit der Arretierung der Schaufel in der zweiten Schwenkposition erfolgen kann. Insbesondere wird die Schaufel vollständig schwerkraftbedingt bewegt.

Die Schaufeln weisen vorzugsweise zwei gegenüberliegende Schnittkanten auf, sodass eine Ausrichtung in beide Rotationsrichtungen möglich ist. Der Schaufelradrahmen des Schaufelrades ist insbesondere beiden Rotationsrichtungen rotierbar angebracht, wobei die Entriegelungseinrichtung stationär relativ zu dem Schaufelradrahmen angebracht ist und nicht um die Schaufelradrahmenachse rotiert. Vorzugsweise weist jede Schaufel genau eine Halteeinrichtung auf.

Ein schwerkraftbedingtes Umschwenken der Schaufeln von der ersten Schwenkposition in die zweite Schwenkposition ermöglicht ein besonders einfaches und zuverlässiges Umschwenken der Schaufeln. Es kann auf zusätzliche Vorrichtungen, die aktiv ein Umschwenken hervorrufen, beispielsweise durch das Aufbringen einer Umschwenkkraft oder das aktive Führen der Schaufeln um die Schwenkachse, verzichtet werden.

Gemäß einer ersten Ausführungsform sind die Schaufeln in der gelösten Position der Halteeinrichtung an dem unteren Wendepunkt der Bewegungsbahn der Schaufeln angeordnet. Mit dem unteren Wendepunkt ist der Punkt der Bewegung des Schaufelrades, insbesondere der Schaufeln des Schaufelrades zu verstehen, an dem die Schaufeln bei der Rotation des Schaufelrades von einer Abwärtsbewegung in eine Aufwärtsbewegung übergehen. Die Bewegungsbahn der Schaufeln weist ebenfalls einen oberen Wendepunkt auf, an dem die Schaufeln von einer Aufwärtsbewegung in eine Abwärtsbewegung übergehen. Bei einer Umkehr der Rotationsrichtung des Schaufelradrahmens sind die Schaufeln zunächst in einer Schwenkposition angeordnet, in der die Schnittkante nicht in Rotationsrichtung weist. In dieser Schwenkposition erfolgt ohne Halteeinrichtung automatisch am unteren Wendepunkt der Bewegungsbahn der Schaufeln ein schwerkraftbedingtes Umschwenken der Schaufeln. An dem oberen Wendepunkt hingegen erfolgt ohne Halteeinrichtung ein Umschwenken der Schaufeln von einer Schwenkposition, in der die Schaufeln mit der Schnittkante in Rotationsrichtung ausgerichtet sind, zurück in erste Schwenkposition. Daher ist es im Betreib des Schaufelrades notwendig, die Schaufeln gegen ein Umschwenken zu Halten. Die Erkenntnis, dass die Schaufeln am unteren Wendepunkt schwerkraftbedingt in die betriebsbereite Position der Schaufeln umschwenken liegt daher der Erfindung zugrunde und sorgt für ein zuverlässiges und einfach zu realisierendes Umschwenken.

Die Halteeinrichtung ist mittels der Entriegelungseinrichtung von der Halteposition in die gelöste Position bewegbar. Vorzugsweise wirkt die Entriegelungseinrichtung während der Rotation, vorzugsweise durch die Rotation des Schaufelradrahmens, mit der Halteeinrichtung zusammen und bewegt die Halteeinrichtung von der Halteposition in die gelöste Position. Das Zusammenwirken der Halteeinrichtung mit der Entriegelungseinrichtung sorgt für ein zuverlässiges Lösen der Halteposition und somit Umschwenken der Schaufeln.

Gemäß einer weiteren Ausführungsform ist die Halteeinrichtung derart ausgebildet ist, dass sie nach dem Bewegen von der Halteposition in die gelöste Position, durch die Rotation des Schaufelradrahmens wieder in die Halteposition bewegt wird. Vorzugsweise wird die Halteeinrichtung automatisch bei einer Rotation des Schaufelradrahmens von der gelösten Position in die Halteposition bewegt. Dies sorgt für eine zuverlässige Arretierung der Schaufeln in der jeweiligen Schwenkposition, insbesondere um ein weiteres Umschwenken an dem oberen Wendepunkt der Bewegungsbahn der Schaufeln zu verhindern. Vorzugsweise ist die Halteeinrichtung mit einer Vorspannkraft in Richtung der Halteposition beaufschlagt. Zum Lösen der Haltevorrichtung wird diese entgegen der Vorspannkraft bewegt.

Die Entriegelungseinrichtung ist gemäß einer weiteren Ausführungsform stationär relativ zu dem Schaufelradrahmen angeordnet. Insbesondere rotiert die Entkoppelungseinrichtung nicht um die Mittelachse des Schaufelradrahmens. Gemäß einer weiteren Ausführungsform ist die Entriegelungseinrichtung von einer Aktivierungsposition, in der die Entriegelungseinrichtung mit der Halteeinrichtung im Eingriff steht, in eine passive Position bewegbar, in der die Halteeinrichtung zu der Entriegelungseinrichtung beabstandet ist. Die Entriegelungseinrichtung ist in der Aktivierungsposition vorzugsweise in der Bewegungsbahn der Schaufeln, insbesondere der Halteeirichtung, angeordnet. In der passiven Position ist die Entriegelungseinrichtung vorzugsweise außerhalb der Bewegungsbahn der Schaufeln, insbesondere der Halteeinrichtungen, angeordnet. Dies sorgt für ein automatisches Zusammenwirken der Entriegelungseinrichtung mit der Halteeinrichtung, sodass die gelöste Position der Halteeinrichtung zuverlässig erreicht wird.

Die Entriegelungseinrichtung ist gemäß einer weiteren Ausführungsform an dem unteren Wendepunkt des Schaufelradrahmens angeordnet. Insbesondere ist die Entriegelungseinrichtung in dem unteren Wendepunkt der Bewegungsbahn der Schaufeln, insbesondere der Halteeinrichtungen, angeordnet. Dadurch wird ein automatisches schwerkraftbedingtes Umschwenken der Schaufeln ermöglicht.

Gemäß einer weiteren Ausführungsform umfasst die Haltevorrichtung einen Bolzen und die Schaufel eine Arretierungsbohrung, wobei der Bolzen derart bewegbar ist, dass er in der Halteposition innerhalb der Arretierungsbohrung und in der gelösten Position außerhalb der Arretierungsbohrung angeordnet ist. Vorzugsweise weist jede Schaufel einen Schaufelrahmen auf, in dem die Arretierungsbohrung angeordnet ist.

Die Schaufel weist gemäß einer weiteren Ausführungsform zumindest zwei Arretierungsbohrungen auf. Die Arretierungsbohrungen sind vorzugsweise zueinander beabstandet in einem Winkel von etwa 30 - 120°, vorzugswiese 60 - 80°, insbesondere 90° angeordnet. Die Arretierungsbohrungen dienen dem Arretieren der Schaufel in der ersten oder der zweiten Schwenkposition. Beispielsweise ist der Bolzen in der ersten Schwenkposition in der ersten Arretierungsbohrung und in der zweiten Schwenkposition in der zweiten Arretierungsbohrung angeordnet.

Die Haltevorrichtung weist gemäß einer weiteren Ausführungsform eine Feder auf, die den Bolzen in Richtung der Arretierungsbohrung mit einer Vorspannkraft beaufschlagt. Vorzugsweise wird der Bolzen bei der Bewegung von der Halteposition in die gelöste Position entgegen der Federkraft bewegt. Eine solche Feder sorgt für eine sichere und automatische Arretierung der Schaufel in jeder der beiden Schwenkpositionen.

Der Bolzen weist gemäß einer weiteren Ausführungsform ein Aktivierungselement und die Entriegelungseinrichtung eine Führungsfläche auf, wobei das Aktivierungselement durch die Rotation des Schaufelrades entlang der Führungsfläche bewegt wird, sodass der Bolzen von der Halteposition in die gelöste Position bewegt wird. Das Aktivierungselement ist beispielsweise ein Hebel mit einer Rolle, die auf der Führungsfläche abrollt. Insbesondere ist das Aktivierungselement fest mit Bolzen verbunden, beispielsweise verschraubt.

Die Erfindung umfasst auch ein Verfahren zum Umschwenken einer Schaufel eines Schaufelrads gemäß einem der vorangehenden Ansprüche mittels einer Entriegelungseinrichtung, um das Schaufelrad in einer ersten Drehrichtung mit den Schaufeln in einer ersten Schwenkposition und in einer entgegengesetzten zweiten Drehrichtung mit den Schaufeln in einer zweiten Schwenkposition zu betreiben, wobei die Schaufeln jeweils um eine Schwenkachse schwenkbar angeordnet sind, und wobei das Verfahren zumindest die Schritte aufweist:
- Anordnen einer Halteeinrichtung an jeder Schaufel, wobei die Halteeinrichtung derart ausgebildet ist, dass die jeweilige Schaufel an dem Schaufelradrahmen mittels der Halteeinrichtung in einer ersten Schwenkposition und einer zweiten Schwenkposition arretierbar ist, Aktivieren der Entriegelungseinrichtung, sodass diese in die Bewegungsbahn der Halteeinrichtung bewegt wird
- Rotieren des Schaufelrads, sodass die Halteeinrichtung in Kontakt mit der Entriegelungseinrichtung kommt.

Die mit Bezug auf das Schaufelrad beschriebenen Ausführungen und Vorteile treffen in Verfahrensmäßiger Entsprechung auch auf das Verfahren zum Umschwenken einer Schaufel eines Schaufelrads zu.

### Beschreibung der Zeichnungen

Die Erfindung ist nachfolgend anhand mehrerer Ausführungsbeispiele mit Bezug auf die beiliegenden Figuren näher erläutert.
Fig. 1 zeigt eine schematische Darstellung eines Schaufelrades gemäß einem Ausführungsbeispiel.
Fig. 2 zeigt eine schematische Darstellung eines Ausschnitts eines Schaufelrads mit einer Halteeinrichtung in einer Halteposition in einer perspektivischen Ansicht gemäß einem Ausführungsbeispiel.
Fig. 3 zeigt eine schematische Darstellung eines Ausschnitts eines Schaufelrads mit einer Halteeinrichtung in einer Halteposition in einer perspektivischen Schnittansicht gemäß dem Ausführungsbeispiel der Fig. 2.
Fig. 4 zeigt eine schematische Darstellung eines Ausschnitts eines Schaufelrads mit einer Halteeinrichtung in einer gelösten Position in einer perspektivischen Ansicht gemäß einem Ausführungsbeispiel.
Fig. 5 zeigt eine schematische Darstellung eines Ausschnitts eines Schaufelrads mit einer Halteeinrichtung in einer gelösten Position in einer perspektivischen Schnittansicht gemäß dem Ausführungsbeispiel der Fig. 4.

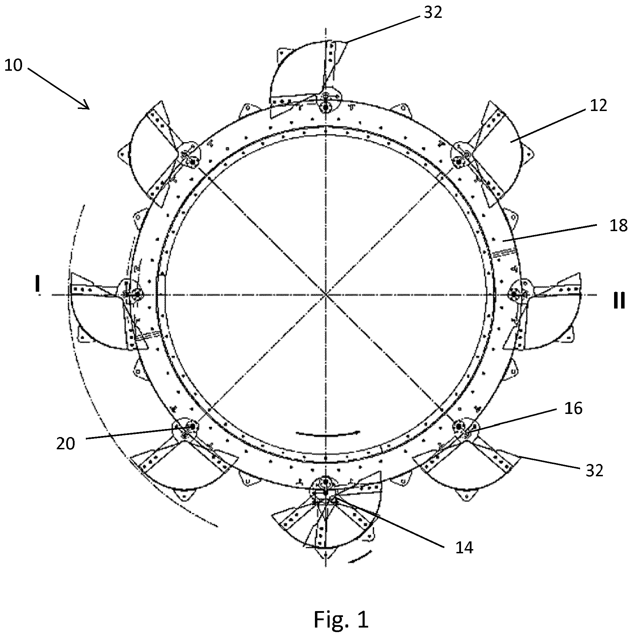

Fig. 1 zeigt ein Schaufelrad 10 beispielsweise eines Schaufelradbaggers zum Abbau von Schüttgut oder eines Brückenschaufelradgerätes zum Rückladen von Schüttgut, insbesondere in einem Tagebau oder einem Lagerplatz. Vorzugsweise werden solche Schaufelräder zum Abbau oder Rückladen von Mineralen, Erzen, Sand, Ton, Kies, Ölsand, Kohle oder weiteren körnigen Materialien eingesetzt. Das Schaufelrad 10 der Fig. 1 weist einen Schaufelradrahmen 18 auf, der im Wesentlichen ringförmig ausgebildet ist und beispielhaft mehrere teilkreisringförmige Segmente aufweist. An dem Schaufelradrahmen 18 sind eine Mehrzahl von Schaufeln 12 angebracht. Beispielhaft weist das in Fig. 1 dargestellte Schaufelrad 10 acht Schaufeln 12 auf, die gleichmäßig zueinander beabstandet an dem äußeren Umfang des Schaufelradrahmens 18 angebracht sind. Jede Schaufel 12 ist um eine Schwenkachse 16 rotierbar an dem Schaufelradrahmen 18 angebracht und mittels einer Halteeinrichtung 20 in einer Schwenkposition gehalten. An dem unteren Ende des Schaufelradrahmens 18 ist eine Entriegelungseinrichtung 14 angeordnet, die relativ zu dem Schaufelradrahmen 18 stationär angebracht ist und sich nicht mit dem Schaufelradrahmen 18 bewegt. Die Entriegelungseinrichtung 14 dient dem Umschwenken der Schaufeln 12 um das Schaufelrad 10 in einer ersten Drehrichtung mit den Schaufeln 12 in einer ersten Schwenkposition I und in einer entgegengesetzten zweiten Drehrichtung mit den Schaufeln 12 in einer zweiten Schwenkposition II zu betreiben,

Das Schaufelrad 10 rotiert im Betrieb um die Mittelachse des Schaufelradrahmens. In dem Beispiel der Fig. 1 ist die Rotationsrichtung beispielhaft entgegen des Uhrzeigersinns angegeben. Vorzugsweise weist jede Schaufel 12 zwei gegenüberliegende Schnittkanten auf, sodass der Betrieb des Schaufelrades in beiden Rotationsrichtungen möglich ist. Erfolgt eine Umkehr der Rotationsrichtung des Schaufelrades 10, ist es erforderlich, die Schaufeln 12 um etwa 90° zu schwenken, sodass die in Rotationsrichtung des Schaufelrades weisende Schnittkante 32 der Schaufel 12 in das abzutragende Material eingreifen kann. Das Ausführungsbeispiel der Fig. 1 zeigt, dass die Schaufeln 12 an der rechten Seite des Schaufelradrahmens 18 in der ersten Schwenkposition I und die Schaufeln 12 an der linken Seite des Schaufelradrahmens 18 in der zweiten Schwenkposition angeordnet sind. Beispielhaft werden die Schaufeln 12 an dem unteren Wendepunkt der Rotationsbewegung umgeschwenkt, um ihre Ausrichtung zu ändern. Mit dem unteren Wendepunkt ist der Punkt der Bewegung des Schaufelrades 10, insbesondere der Schaufeln 12 des Schaufelrades 10 zu verstehen, an dem die Schaufeln 12 bei der Rotation des Schaufelrades 10 von einer Abwärtsbewegung in eine Aufwärtsbewegung übergehen. Die Bewegungsbahn der Schaufeln 12 weist ebenfalls einen oberen Wendepunkt auf, an dem die Schaufeln 12 von einer Aufwärtsbewegung in eine Abwärtsbewegung übergehen. Bei einer an einer Schwenkachse 16 an dem Schaufelradrahmen 18 schwenkbar angebrachten Schaufel 12 ohne Halteeinrichtung 20 findet schwerkraftbedingt an dem unteren Wendepunkt bei der Rotation des Schaufelrades 10 ein Umschwenken der Schaufeln 12 um die Schwenkachse 16 statt, wenn die Schaufeln 12 nicht in Rotationsrichtung ausgerichtet sind. An dem oberen Wendepunkt findet lediglich dann ein schwerkraftbedingtes Umschwenken statt, wenn die Schaufeln 12 in Rotationsrichtung ausgerichtet, also einsatzbereit, sind. Die Halteeinrichtung 20 verhindert in ihrer Halteposition ein Umschwenken der Schaufeln 12 während der Rotation des Schaufelrades 10, insbesondere an den Wendepunkten und der Abwärtsbewegung der Schaufeln 12. In der gelösten Position der Halteeinrichtung 20 ermöglicht diese ein Umschwenken der Schaufeln 12 um die jeweilige Schwenkachse 16.

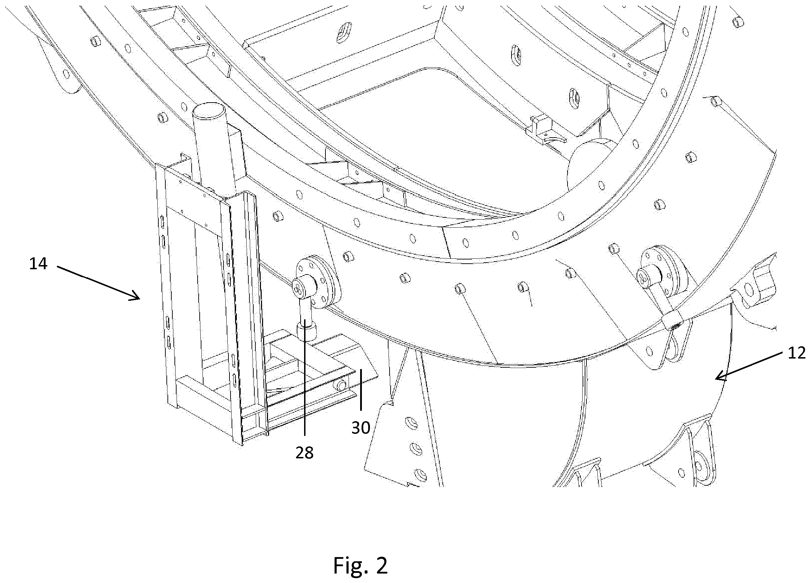

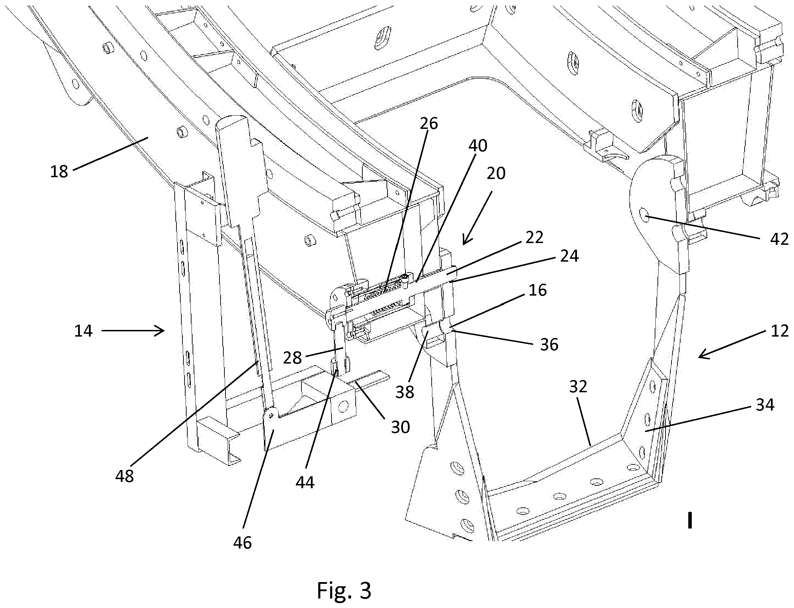

Fig. 2 bis 5 zeigt eine Detaildarstellung der Entriegelungseinrichtung 14 und der Halteeinrichtung 20 einer Schaufel 12. Fig. 2 und 3 zeigen die Halteeinrichtung 20 in einer Halteposition, wobei die Entriegelungseinrichtung 14 in einer passiven Position ist. Beispielhaft ist die Schaufel 12 in der ersten Schwenkposition I angeordnet. Die Schaufel 12 weist einen Schaufelrahmen 34 mit zumindest zwei Schnittkanten 32 auf, wobei in Fig. 3 lediglich eine Schnittkante 32 sichtbar ist. Der Schaufelrahmen 34 ist schwenkbar mit dem Schaufelradrahmen 18 verbunden. Die Schwenkachse 16 verläuft beispielhaft durch eine Bohrung 36 in dem Schaufelrahmen 34, die fluchtend zu einer Bohrung 38 in dem Schaufelradrahmen 18 angeordnet ist. Vorzugsweise ist in den Bohrungen 36, 38 eine nicht dargestellte Lagerung angeordnet, um eine Rotation der Schaufel 12 um die Schwenkachse 16 zu ermöglichen. Der Schaufelrahmen 34 weist eine Arretierungsbohrung 24 auf, die fluchtend zu einer Aussparung 40 in dem Schaufelradrahmen 18 angeordnet und zu der Schwenkachse 16 beabstandet ist. In der Aussparung 40 ist die Halteeinrichtung 20 angeordnet. Die Halteeinrichtung 20 weist einen Bolzen 22 auf, der sich in der Halteposition durch die Aussparung 40 und die Bohrung 24 in dem Schaufelrahmen 34 erstreckt. Um den Bolzen 22 herum und innerhalb der Aussparung 40 ist eine Feder 26 angeordnet, die mit ihrem einen Ende an dem Schaufelradrahmen 18 und mit ihrem anderen Ende an einem Absatz des Bolzens 22 abstützt und den Bolzen 22 mit einer Vorspannkraft in Richtung der Halteposition, insbesondere in Richtung der Arretierungsbohrung 24 beaufschlagt.

Der Schaufelrahmen 34 weist eine weitere Arretierungsbohrung 42 auf, die derart angeordnet ist, dass der Bolzen 22 in der zweiten Schwenkposition II, in der die Schaufel 12 um etwa 90° um die Schwenkachse geschwenkt ist, in die weitere Arretierungsbohrung 42 eingreift, um die Schaufel 12 in der zweiten Schwenkposition II zu arretieren. Vorzugsweise ist die zweite, weitere Arretierungsbohrung 42 in einem Winkel von etwa 90° um die Schwenkachse 16 zu der ersten Arretierungsbohrung 24 versetzt angeordnet.

Der Bolzen 22 umfasst vorzugsweise ein Aktivierungselement 28, insbesondere einen Hebel, der an einem Ende des Bolzens 22, insbesondere dem Richtung der Entriegelungseinrichtung 14 weisenden Ende, angeordnet ist. Der Hebel 28 erstreckt sich vorzugsweise in etwa orthogonal zu dem Bolzen und weist an seinem Ende beispielhaft eine Rolle 44 auf. Die Entriegelungseinrichtung 14 ist in Fig. 2 und 3 in der passiven Position dargestellt und weist eine Führungsfläche 30 auf, die an einem Rahmen 46 angebracht ist. An dem Rahmen greift ein Aktuator 48 an, der in Fig. 2 und 3 in einer eingefahrenen Position gezeigt ist. Der Rahmen 46 zusammen mit der Führungsfläche 30 ist schwenkbar angebracht, sodass bei einem Ausfahren des Aktuators 48, der Rahmen 46 verschwenkt wird und die Führungsfläche 30 in die Bewegungsbahn der Schaufeln 12, insbesondere des Aktivierungselements 28 der Halteeinrichtung 20, bewegt wird. Die Führungsfläche 30 ist beispielhaft gekrümmt, vorzugsweise u-förmig, ausgebildet. Die Entriegelungseinrichtung 14 ist stationär angeordnet, sodass der Schaufelradrahmen 18 und die Schaufeln 12 relativ zu der Entriegelungseinrichtung rotieren.

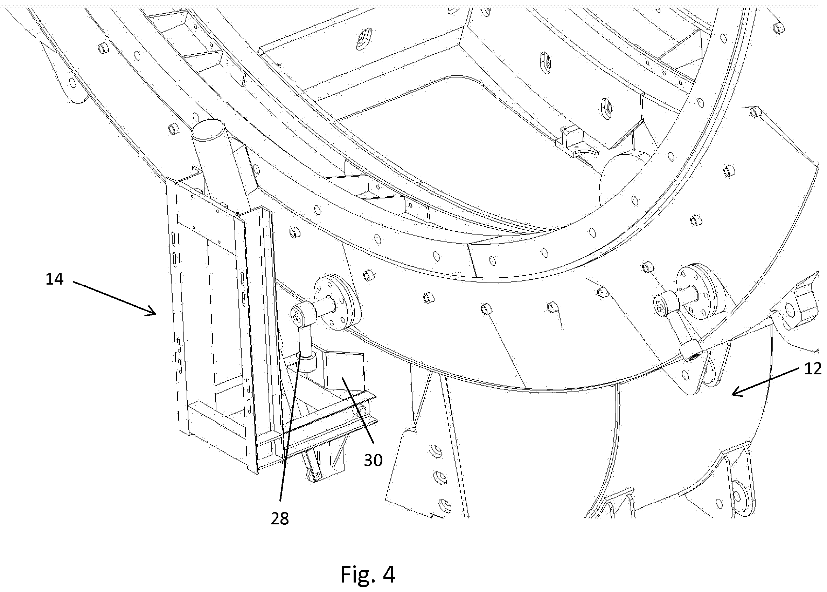

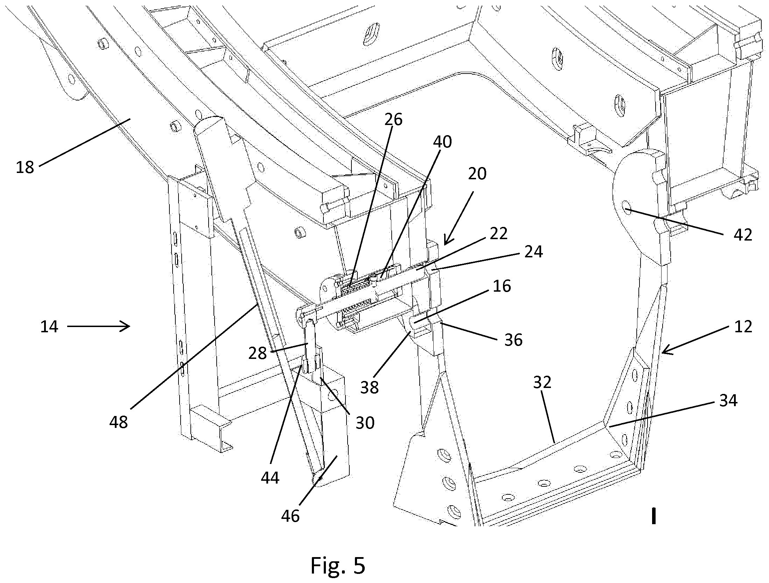

Fig. 4 und 5 zeigen die Halteeinrichtung 20 in einer gelösten Position, wobei die Entriegelungseinrichtung 14 in einer Aktivierungsposition ist. Beispielhaft ist die Schaufel 12 noch in der ersten Schwenkposition I angeordnet. In der Aktivierungsposition der Entriegelungseinrichtung 14 ist der Aktuator ausgefahren, sodass die Führungsfläche 30 in der Bewegungsbahn der Halteeinrichtung 20, insbesondere des Aktivierungselements 28 des Bolzens 22 angeordnet ist. Durch die Rotation, insbesondere im Sinne der neu einzustellenden Rotationsrichtung des Schaufelradrahmens 18 wird das Aktivierungselement 28 der Halteeinrichtung 20 entlang der Führungsfläche 30 bewegt. Vorzugsweise rollt die Rolle 44 auf der Führungsfläche 30 ab. Die Bewegung des Aktivierungselements 28 entlang der Führungsfläche 30 erfolgt zumindest teilweise in Längsrichtung des Bolzens 22, sodass dieser entgegen der Vorspannkraft der Feder 26 aus der Arretierungsbohrung 24 heraus bewegt wird. In der in Fig. 4 und 5 gezeigten gelösten Position der Halteeinrichtung 20 wird eine Rotation der Schaufel 12 um die Schwenkachse 16 nicht durch die Halteeinrichtung 20 verhindert. Nach dem Bewegen der Halteeinrichtung 20 in die gelöste Position wird die Schaufel 12 schwerkraftbedingt um die Schwenkachse 16 schwenken während der Schaufelradrahmen 18 rotiert und das Aktivierungselement 28 der Halteeinrichtung 20 entlang der Führungsfläche bewegt wird. Die Feder 26 bewirkt, dass der Bolzen 22, nachdem das Aktivierungselement 28 die Führungsfläche 30 verlassen hat, lediglich mit der Vorspannkraft beaufschlagt wird. Die Schaufel 12 wird so weit um die Schwenkachse 16 verschwenkt bis die zweite Arretierungsbohrung 42 fluchtend mit dem Bolzen 22 angeordnet ist, sodass der Bolzen 22 automatisch in die zweite Arretierungsbohrung 42 bewegt wird und die Schaufel 12 in der zweiten Schwenkposition II arretiert ist.

### Bezugszeichenliste

- 10: Schaufelrad
- 12: Schaufel
- 14: Entriegelungseinrichtung
- 16: Schwenkachse
- 18: Schaufelradrahmen
- 20: Halteeinrichtung
- 22: Bolzen
- 24: Arretierungsbohrung
- 26: Feder
- 28: Aktivierungselement
- 30: Führungsfläche
- 32: Schnittkante
- 34: Schaufelrahmen
- 36: Bohrung in dem Schaufelrahmen
- 38: Bohrung in dem Schaufelradrahmen
- 40: Aussparung in dem Schaufelradrahmen
- 42: weitere/ zweite Arretierungsbohrung
- 44: Rolle
- 46: Rahmen
- 48: Aktuator

- I: erst Schwenkposition
- II: zweite Schwenkposition

## Patentansprüche

1. Schaufelrad (10) mit einem Schaufelradrahmen (18),
einer Mehrzahl von an dem Schaufelradrahmen (18) angebrachten Schaufeln (12),
wobei die Schaufeln (12) um eine Schwenkachse (16) schwenkbar an dem Schaufelradrahmen (18) angeordnet sind,
wobei jede Schaufel (12) eine Halteeinrichtung (20) aufweist und mittels der Halteeinrichtung (20) am Schaufelradrahmen (18) angeordnet ist und
die Halteeinrichtung (20) derart ausgebildet ist, dass die jeweilige Schaufel (12) am Schaufelradrahmen (18) mittels der Halteeinrichtung (20) in einer ersten Schwenkposition (I) und einer zweiten Schwenkposition (II) arretierbar ist, um das Schaufelrad (10) in einer ersten Drehrichtung mit den Schaufeln (12) in der ersten Schwenkposition (I) und in einer entgegengesetzten zweiten Drehrichtung mit den Schaufeln (12) in der zweiten Schwenkposition (II) zu betreiben,
**dadurch gekennzeichnet, dass**
die Halteeinrichtung (20) genau einer Schaufel (12) zugeordnet ist, sodass die Schaufel (12) mittels der gleichen Halteeinrichtung (20) in der ersten Schwenkposition (I) und der zweiten Schwenkposition (II) arretierbar ist und, dass das Schaufelrad (10) eine Entriegelungseinrichtung (14) aufweist zum Bewegen der Halteeinrichtung (20) von einer Halteposition, in der die Halteeinrichtung (20) ein Schwenken der Schaufel (12) um die Schwenkachse (16) verhindert, in eine gelöste Position ist, in der die Halteeinrichtung (20) ein Schwenken der Schaufel (12) um die Schwenkachse (16) erlaubt, sodass die Schaufel (12) in der gelösten Position der Halteeinrichtung (20) schwerkraftbedingt von der ersten Schwenkposition (I) in die zweite Schwenkposition (II) bewegt wird.

2. Schaufelrad (10) nach Anspruch 1, wobei die Schaufel (12) in der gelösten Position der Halteeinrichtung (20) in dem unteren Wendepunkt der Bewegungsbahn der Schaufeln (12) angeordnet ist.

3. Schaufelrad (10) nach einem der vorangehenden Ansprüche, wobei die Halteeinrichtung (20) während der Rotation des Schaufelradrahmes (18) mittels der Entriegelungseinrichtung (14) von der Halteposition in die gelöste Position bewegt wird.

4. Schaufelrad (10) nach einem der vorangehenden Ansprüche, wobei die Halteeinrichtung (20) derart ausgebildet ist, dass sie nach dem Bewegen von der Halteposition in die gelöste Position, durch die Rotation des Schaufelradrahmens (18) wieder in die Halteposition bewegt wird.

5. Schaufelrad (10) nach einem der vorangehenden Ansprüche, wobei die Entriegelungseinrichtung (14) stationär relativ zu dem Schaufelradrahmen (18) angeordnet ist.

6. Schaufelrad (10) nach einem der vorangehenden Ansprüche, wobei die Entriegelungseinrichtung (14) von einer Aktivierungsposition, in der die Entriegelungseinrichtung (14) mit der Halteeinrichtung (20) im Eingriff steht, in eine passive Position bewegbar ist, in der die Halteeinrichtung (20) zu der Entriegelungseinrichtung (14) beabstandet ist.

7. Schaufelrad (10) nach einem der vorangehenden Ansprüche, wobei die Entriegelungseinrichtung (14) an dem unteren Wendepunkt des Schaufelradrahmens (18) angeordnet ist,

8. Schaufelrad (10) nach einem der vorangehenden Ansprüche, wobei die Haltevorrichtung (20) einen Bolzen (22) und die Schaufel (12) eine Arretierungsbohrung (24) umfasst und wobei der Bolzen (22) derart bewegbar ist, dass er in der Halteposition innerhalb der Arretierungsbohrung (24) und in der gelösten Position außerhalb der Arretierungsbohrung (24) angeordnet ist.

9. Schaufelrad (10) nach Anspruch 8, wobei die Schaufel (12) zumindest zwei Arretierungsbohrungen (24, 42) aufweist.

10. Schaufelrad (10) nach Anspruch 8 oder 9, wobei die Halteeinrichtung (20) eine Feder (26) aufweist, die den Bolzen (22) in Richtung der Arretierungsbohrung (24) mit einer Vorspannkraft beaufschlagt.

11. Schaufelrad (10) nach einem der Ansprüche 8 bis 10, wobei der Bolzen (22) ein Aktivierungselement (28) und die Entriegelungseinrichtung (14) eine Führungsfläche (30) aufweist, wobei das Aktivierungselement (28) durch die Rotation des Schaufelrades (10) entlang der Führungsfläche (30) bewegt wird, sodass der Bolzen (22) von der Halteposition in die gelöste Position bewegt wird.

12. Verfahren zum Umschwenken einer Schaufel (12) eines Schaufelrads (10) gemäß einem der vorangehenden Ansprüche mittels einer Entriegelungseinrichtung (14), um das Schaufelrad (10) in einer ersten Drehrichtung mit den Schaufeln (12) in einer ersten Schwenkposition (I) und in einer entgegengesetzten zweiten Drehrichtung mit den Schaufeln (12) in einer zweiten Schwenkposition (II) zu betreiben, wobei die Schaufeln (12) jeweils um eine Schwenkachse (16) schwenkbar angeordnet sind, und wobei das Verfahren zumindest die Schritte aufweist:
- Anordnen jeweils einer Halteeinrichtung (20) an jeder Schaufel (12), wobei die Halteeinrichtung (20) genau einer Schaufel (12) zugeordnet und derart ausgebildet ist, dass die jeweilige Schaufel (12) am Schaufelradrahmen (18) mittels der gleichen Halteeinrichtung (20) in einer ersten Schwenkposition (I) und einer zweiten Schwenkposition (II) arretierbar ist, Aktivieren der Entriegelungseinrichtung (14), sodass diese in die Bewegungsbahn der Halteeinrichtung (20) bewegt wird
- Rotieren des Schaufelrads (10), sodass die Halteeinrichtung (20) in Kontakt mit der Entriegelungseinrichtung (14) kommt.

## Claims

1. Bucket wheel (10) comprising a bucket wheel frame (18),
a plurality of buckets (12) attached to the bucket wheel frame (18),
the buckets (12) being arranged on the bucket wheel frame (18) pivotably about a pivot axis (16),
wherein each bucket (12) has a retaining device (20) and is arranged on the bucket wheel frame (18) by means of the retaining device (20) and
the retaining device (20) is configured in such a way that the respective bucket (12) can be locked on the bucket wheel frame (18) by means of the retaining device (20) in a first pivot position (I) and a second pivot position (II), in order to operate the bucket wheel (10) in a first direction of rotation with the buckets (12) in the first pivot position (I) and in an opposite second direction of rotation with the buckets (12) in the second pivot position (II),
**characterised in that**
the retaining device (20) is associated with precisely one bucket (12), so that the bucket (12) can be locked by means of the same retaining device (20) in the first pivot position (I) and the second pivot position (II), and **in that** the bucket wheel (10) has an unlocking device (14) for moving the retaining device (20) from a retaining position, in which the retaining device (20) prevents pivoting of the bucket (12) about the pivot axis (16), to a released position in which the retaining device (20) allows the bucket (12) to pivot about the pivot axis (16), so that in the released position of the retaining device (20) the bucket (12) is moved by gravity from the first pivot position (I) to the second pivot position (II).

2. Bucket wheel (10) according to claim 1, wherein the bucket (12) in the released position of the retaining device (20) is arranged in the lower turning point of the movement path of the buckets (12).

3. Bucket wheel (10) according to any one of the preceding claims, wherein the retaining device (20) is moved, during the rotation of the bucket wheel frame (18), from the retaining position to the released position by means of the unlocking device (14).

4. Bucket wheel (10) according to any one of the preceding claims, wherein the retaining device (20) is configured in such a way that, after movement from the retaining position to the released position, it is moved by the rotation of the bucket wheel frame (18) once again into the retaining position.

5. Bucket wheel (10) according to any one of the preceding claims, wherein the unlocking device (14) is arranged stationarily relative to the bucket wheel frame (18).

6. Bucket wheel (10) according to any one of the preceding claims, wherein the unlocking device (14) can be moved from an activation position, in which the unlocking device (14) is in engagement with the retaining device (20), to a passive position, in which the retaining device (20) is spaced from the unlocking device (14).

7. Bucket wheel (10) according to any one of the preceding claims, wherein the unlocking device (14) is arranged at the lower turning point of the bucket wheel frame (18).

8. Bucket wheel (10) according to any one of the preceding claims, wherein the retaining device (20) comprises a bolt (22) and the bucket (12) comprises a locking bore (24), and wherein the bolt (22) can be moved in such a way that in the retaining position it is arranged within the locking bore (24) and in the released position it is arranged outside the locking bore (24).

9. Bucket wheel (10) according to claim 8, wherein the bucket (12) has at least two locking bores (24, 42).

10. Bucket wheel (10) according to claim 8 or 9, wherein the retaining device (20) has a spring (26), which urges the bolt (22) towards the locking bore (24) with a pretensioned force.

11. Bucket wheel (10) according to any one of claims 8 to 10, wherein the bolt (22) has an activation element (28) and the unlocking device (14) has a guide surface (30), wherein the activation element (28) is moved by the rotation of the bucket wheel (10) along the guide surface (30), so that the bolt (22) is moved from the retaining position to the released position.

12. Method for pivoting a bucket (12) of a bucket wheel (10) according to any one of the preceding claims by means of an unlocking device (14), in order to operate the bucket wheel (10) in a first direction of rotation with the buckets (12) in a first pivot position (I) and in an opposite second direction of rotation with the buckets (12) in a second pivot position (II), wherein the buckets (12) are each arranged pivotably about a pivot axis (16), and wherein the method comprises at least the following steps:
- arrangement of a respective retaining device (20) on each bucket (12), the retaining device (20) being associated with precisely one bucket (12) and configured in such a way that the respective bucket (12) can be locked on the bucket wheel frame (18) by means of the same retaining device (20) in a first pivot position (I) and a second pivot position (II), activation of the unlocking device (14) so that it is moved into the movement path of the retaining device (20),
- rotation of the bucket wheel (10) so that the retaining device (20) comes into contact with the unlocking device (14).

## Revendications

1. Roue à aubes (10) avec un cadre de roue à aubes (18),
une pluralité d'aubes (12) montées au niveau du cadre de roue à aubes (18),
dans laquelle les aubes (12) sont agencées de manière pivotante autour d'un axe de pivotement (16) au niveau du cadre de roue à aubes (18),
dans laquelle chaque aube (12) présente un dispositif de retenue (20) et est agencée au moyen du dispositif de retenue (20) au niveau du cadre de roue à aubes (18) et
le dispositif de retenue (20) est réalisé de telle manière que l'aube (12) respective puisse être arrêtée au niveau du cadre de roue à aubes (18) au moyen du dispositif de retenue (20) dans une première position de pivotement (I) et une seconde position de pivotement (II) afin de faire fonctionner la roue à aubes (10) dans un premier sens de rotation avec les aubes (12) dans la première position de pivotement (I) et dans un second sens de rotation opposé avec les aubes (12) dans la seconde position de pivotement (II),
**caractérisée en ce que**
le dispositif de retenue (20) est associé précisément à une aube (12) de sorte que l'aube (12) puisse être arrêtée au moyen du dispositif de retenue (20) identique dans la première position de pivotement (I) et la seconde position de pivotement (II) et, que la roue à aubes (10) présente un dispositif de déverrouillage (14) pour le déplacement du dispositif de retenue (20) d'une position de retenue, dans laquelle le dispositif de retenue (20) empêche un pivotement de l'aube (12) autour de l'axe de pivotement (16), dans une position détachée, dans laquelle le dispositif de retenue (20) permet un pivotement de l'aube (12) autour de l'axe de pivotement (16) de sorte que l'aube (12) soit déplacée dans la position détachée du dispositif de retenue (20) en étant soumise à la force de gravité de la première position de pivotement (I) dans la seconde position de pivotement (II).

2. Roue à aubes (10) selon la revendication 1, dans laquelle l'aube (12) est agencée dans la position détachée du dispositif de retenue (20) dans le point de basculement inférieur de la bande de déplacement des aubes (12).

3. Roue à aubes (10) selon l'une quelconque des revendication précédentes, dans laquelle le dispositif de retenue (20) est déplacé pendant la rotation du cadre de roue à aubes (18) au moyen du dispositif de déverrouillage (14) de la position de retenue dans la position détachée.

4. Roue à aubes (10) selon l'une quelconque des revendication précédentes, dans laquelle le dispositif de retenue (20) est réalisé de telle manière qu'il soit déplacé après le déplacement de la position de retenue dans la position détachée, par la rotation du cadre de roue à aubes (18) de nouveau dans la position de retenue.

5. Roue à aubes (10) selon l'une quelconque des revendication précédentes, dans laquelle le dispositif de déverrouillage (14) est agencé de manière stationnaire par rapport au cadre de roue à aubes (18).

6. Roue à aubes (10) selon l'une quelconque des revendication précédentes, dans laquelle le dispositif de déverrouillage (14) est mobile d'une position d'activation, dans laquelle le dispositif de déverrouillage (14) est en prise avec le dispositif de retenue (20), dans une position passive, dans laquelle le dispositif de retenue (20) est espacé du dispositif de déverrouillage (14).

7. Roue à aubes (10) selon l'une quelconque des revendication précédentes, dans laquelle le dispositif de déverrouillage (14) est agencé au niveau du point de basculement inférieur du cadre de roue à aubes (18).

8. Roue à aubes (10) selon l'une quelconque des revendication précédentes, dans laquelle le dispositif de retenue (20) comporte un boulon (22) et l'aube (12) comporte un alésage d'arrêt (24) et dans laquelle le boulon (22) est mobile de telle manière qu'il soit agencé dans la position de retenue à l'intérieur de l'alésage d'arrêt (24) et dans la position détachée en dehors de l'alésage d'arrêt (24).

9. Roue à aubes (10) selon la revendication 8, dans laquelle l'aube (12) présente au moins deux alésages d'arrêt (24, 42).

10. Roue à aubes (10) selon la revendication 8 ou 9, dans laquelle le dispositif de retenue (20) présente un ressort (26) qui sollicite le boulon (22) en direction de l'alésage d'arrêt (24) par une force de précontrainte.

11. Roue à aubes (10) selon l'une quelconque des revendication 8 à 10, dans laquelle le boulon (22) présente un élément d'activation (28) et le dispositif de déverrouillage (14) présente une surface de guidage (30), dans laquelle l'élément d'activation (28) est déplacé par la rotation de la roue à aubes (10) le long de la surface de guidage (30) de sorte que le boulon (22) soit déplacé de la position de retenue dans la position détachée.

12. Procédé de pivotement d'une aube (12) d'une roue à aubes (10) selon l'une quelconque des revendications précédentes au moyen d'un dispositif de déverrouillage (14), afin de faire fonctionner la roue à aubes (10) dans un premier sens de rotation avec les aubes (12) dans une première position de pivotement (I) et dans un second sens de rotation opposé avec les aubes (12) dans une seconde position de pivotement (II), dans lequel les aubes (12) sont agencées respectivement de manière pivotante autour d'un axe de pivotement (16), et dans lequel le procédé présente au moins les étapes consistant à :
- agencer respectivement un dispositif de retenue (20) au niveau de chaque aube (12), dans lequel le dispositif de retenue (20) est associé précisément à une aube (12) et est réalisé de telle manière que l'aube respective (12) puisse être arrêtée au niveau du cadre de roue à aubes (18) au moyen du dispositif de retenue (20) identique dans une première position de pivotement (I) et une seconde position de pivotement (II), activer le dispositif de déverrouillage (14) de sorte que celui-ci soit déplacé dans la bande de déplacement du dispositif de retenue (20),
- tourner la roue à aubes (10) de sorte que le dispositif de retenue (20) vienne en contact avec le dispositif de déverrouillage (14).
